# EUROPÄISCHE PATENTSCHRIFT

(11) **EP 1 160 960 B1**
(45) Veröffentlichungstag und Bekanntmachung des Hinweises auf die Patenterteilung: **21.11.2007**
(21) Anmeldenummer: 01107240.2
(22) Anmeldetag: 23.03.2001
(51) Int. Cl.: H02K 29/08, H02P 6/14

(54) **Explosionsgeschützte Motoranordnung**
Explosion proof motor assembly
Ensemble de moteur antidéflagrant

(30) Priorität: 27.05.2000 DE 20009553 U
(43) Veröffentlichungstag der Anmeldung: 05.12.2001
(73) Patentinhaber: ebm-papst St. Georgen GmbH & Co. KG, 78112 St. Georgen (DE)
(72) Erfinder: Engel, Wolfgang, 78126 Königsfeld (DE); Karwath, Arno, 78652 Deißlingen (DE); Reich, Harald, 78112 St. Georgen (DE)

(56) Entgegenhaltungen:
- WO-A-97/48178
- US-A- 4 806 808
- US-A- 6 008 602
- PATENT ABSTRACTS OF JAPAN vol. 1995, no. 8, 29. September 1995 (1995-09-29) -& JP 07 115787 A (MATSUSHITA ELECTRIC CO LTD), 2. Mai 1995 (1995-05-02)

## Beschreibung

Die Erfindung betrifft eine Motoranordnung mit einem elektronisch kommutierten Elektromotor in explosionsgeschützter Ausführung, wie er z.B. zum Antrieb von Lüftern in einer potenziell explosiven Atmosphäre Verwendung finden kann.

Bei derartigen Motoranordnungen werden gewöhnlich sogenannte Sicherheitsbarrieren verwendet, die jedoch für viele Anwendungsfälle zu teuer sind. Auch können bei solchen Sicherheitsbarrieren zu hohe Spannungsabfälle auftreten.

Die US-A-6 008 602 und WO-A-9 748 178 beschreiben solche Motoranordnungen.

Es ist eine Aufgabe der Erfindung, eine neue Motoranordnung bereitzustellen, deren Motor sich für den Betrieb in einer explosionsgefährdeten Umgebung eignet.

Nach der Erfindung wird diese Aufgabe gelöst durch den Gegenstand des Anspruchs 1. Bei einer erfindungsgemäßen Motoranordnung verwendet man also einen Elektromotor mit galvanomagnetischem Sensor. Zwischen Motorstromkreis und Sensorstromkreis ist eine vollständige galvanische Trennung vorgesehen, wodurch mit Sicherheit verhindert wird, dass im Fehlerfall energiereiche Netzspannung in den Sensorstromkreis gelangt. Die eigentliche Kommutierungselektronik der Motoranordnung ist bevorzugt außerhalb des Elektromotors angeordnet. Dadurch wird es möglich, z.B. auf einer im Elektromotor eingebauten, relativ kleinen Leiterplatte den Sensorstromkreis elektrisch vollständig vom Wicklungsstromkreis des Elektromotors zu trennen. Da das Ausgangssignal des Sensors über einen Optokoppler der Kommutierungselektronik zugeführt wird, ist auch hier eine vollständige galvanische Trennung gegeben.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: eine Schemadarstellung einer bevorzugten Ausführungsform der Erfindung, und
- Fig. 2: eine bevorzugte Ausführungsform eines Elektromotors zur Verwendung bei der Anordnung gemäß Fig. 1.

In der nachfolgenden Beschreibung werden gleiche oder gleich wirkende Teile mit denselben Bezugszeichen bezeichnet und gewöhnlich nur einmal beschrieben.

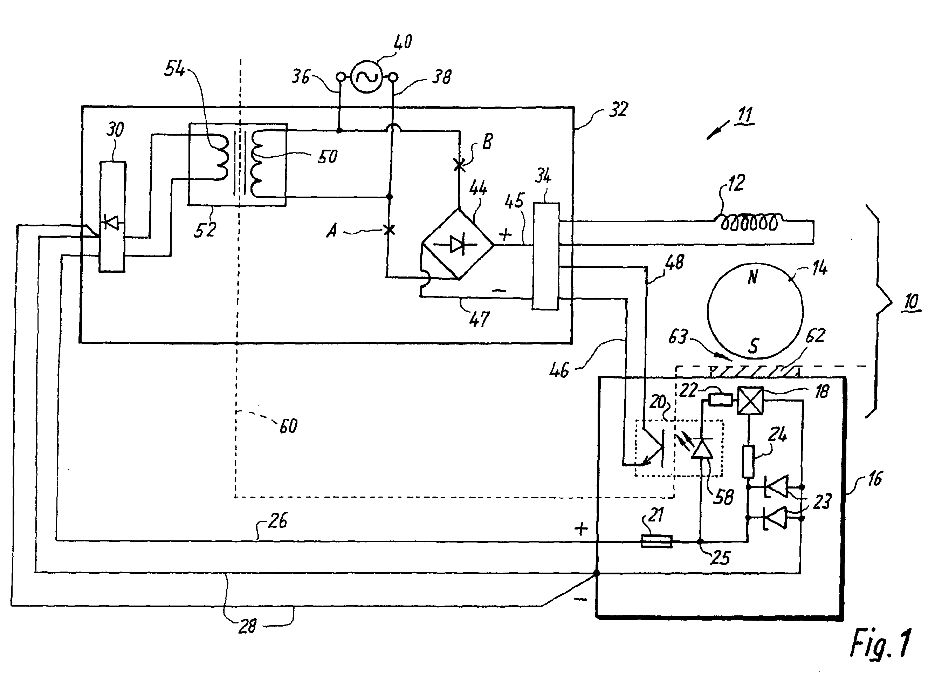

**Fig. 1** zeigt in schematisierter Form ein Ausführungsbeispiel einer erfindungsgemäßen Motoranordnung 11. Rechts befindet sich ein elektronisch kommutierter Elektromotor (ECM) 10 mit einer Statorwicklung 12, einem permanentmagnetischen Rotor 14, und einer im ECM 10 isoliert angeordneten Leiterplatte 16, auf welcher ein Hall-IC 18 angeordnet ist, der von einem Magnetfeld des Rotors 14 gesteuert wird. Die Teile 12, 14, 16, 18, 20 sind nur ganz schematisch angedeutet, um das Verständnis der Erfindung zu erleichtern. Z.B. werden in der Praxis meist vier- oder sechspolige Rotoren 14 verwendet.

Die Leiterplatte 16 trägt auch einen Optokoppler 20, eine Schmelzsicherung 21, einen Widerstand 22, zwei Zenerdioden 23, und einen Widerstand 24. Sie erhält eine Gleichspannung von 10 V über zwei Leitungen 26, 28 von einem Gleichrichter 30, der auf einer externen Leiterplatte 32 angeordnet ist, auf der sich auch die Kommutierungselektronik 34 befindet, an welche die Wicklung 12 angeschlossen ist. Diese Leiterplatte 32 befindet sich bevorzugt außerhalb des ECM 10, gewöhnlich in einem explosionsgeschützten Gehäuse (druckfeste Kapselung). Die Kommutierungselektronik 34 enthält bevorzugt eine elektronische Begrenzung des Motorstroms, wie sie z.B. aus der EP-A2-0739084 bekannt ist. Die Minusleitung 28 ist aus Gründen der Redundanz doppelt ausgeführt.

Die Leiterplatte 32 wird im Betrieb über Anschlüsse 36, 38 an eine Wechselspannungsquelle 40 angeschlossen, typisch an ein Wechselstromnetz mit 230 V, 50 Hz, oder an ein Drehstromnetz. Diese Wechselspannung wird über einen Gleichrichter 44 (mit Glättungselektronik, also Kondensatoren etc.) gleichgerichtet und über einen Gleichstrom-Zwischenkreis 45, 47 der Kommutierungselektronik 34 zugeführt. Die Spannung am Gleichstrom-Zwischenkreis 45, 47 kann je nach Motortyp z.B. zwischen 20 V und mehr als 350 V liegen.

Die Signale vom Ausgang des Optokopplers 20 werden über zwei Leitungen 46, 48 der Kommutierungselektronik 34 zugeführt und steuern in üblicher Weise die Kommutierung abhängig von der Stellung des Rotors 14.

An die Anschlüsse 36, 38 ist auch die Primärwicklung 50 eines kurzschlussfesten Trenntransformators 52 (bevorzugt entsprechend EN50020, Abschnitt 8.1) angeschlossen, an dessen Sekundärwicklung 54 der Gleichrichter 30 angeschlossen ist, der den Hall-IC 18 und den Optokoppler 20 speist.

Die positive Leitung 26 ist über die Schmelzsicherung 21 (z.B. 62 mA, 125 V) und einen Knotenpunkt 25 mit der Anode der LED 58 des Optokopplers 20 verbunden, deren Katode über einen Widerstand 22 mit dem Signalausgang des Hall-IC 18 verbunden ist. Ferner ist der Knotenpunkt 25 über den Widerstand 24 mit dem Stromversorgungseingang des Hall-IC 18 verbunden. Die negative Leitung 28 ist mit dem Minusanschluss des Hall-IC 18 verbunden. Zwischen dem Knotenpunkt 25 und der negativen Leitung 28 liegen die beiden Zenerdioden 23, z.B. für 5,6 V. Damit wird sicher gestellt, dass die Spannung im eigensicheren Kreis nicht > 5,6 V werden kann. Im Fehlerfall löst die Schmelzsicherung 21 aus. Der Vorwiderstand für die Zenerdioden 23 befindet sich, am Ausgang des Gleichrichters 30, auf der externen Leiterplatte 32.

Die Widerstände 22 und 24 (z.B. jeweils 1 kΩ) sind so dimensioniert, dass bei einem Kurzschluss die maximale an ihnen erzeugte elektrische Leistung deutlich unter zwei Dritteln der maximal zulässigen Verlustleistung dieser Widerstände liegt.

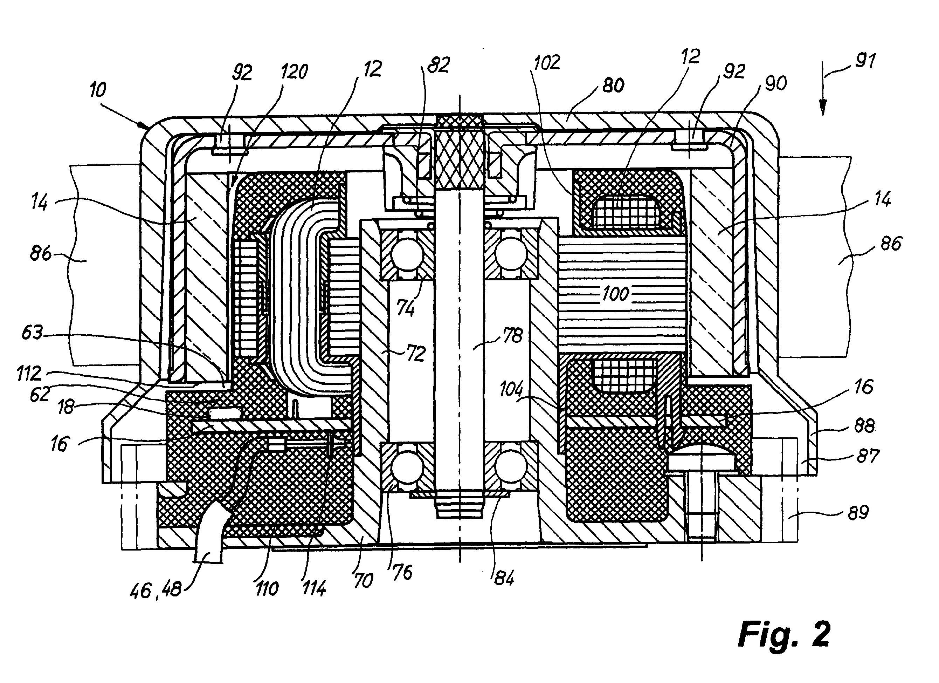

Mit 60 ist symbolisch die galvanische Trennung zwischen eigensicherem Sensorstromkreis (unterhalb der Linie 60) und energiereichem Motorstromkreis (oberhalb der Trennlinie 60) angedeutet. Diese Trennung wird gebildet durch den Trenntransformator 52, den Optokoppler 20, und teilweise auch durch eine Isolation 62, welche im Luftspalt 63 zwischen dem Hall-IC 18 und dem Rotor 14 angeordnet ist. Die Isolation 62 ist in Fig. 1 nur symbolisch angedeutet. Sie ist in Fig. 2 an einem bevorzugten Beispiel dargestellt. Bevorzugt wird sie am Stator vorgesehen, doch ist es auch nicht ausgeschlossen, eine entsprechende Isolation am Rotor 14 vorzusehen.

Erläuternd wird hierzu auf folgendes hingewiesen: Für eigensichere Elektromotoren sind durch die Norm relativ große Isolationsdicken vorgeschrieben, die bei kleineren Motoren, und speziell bei elektronisch kommutierten Motoren, nicht eingehalten werden können, weil sonst der Motor nicht funktionsfähig wäre. Z.B. müsste nach der Norm eine Isolationsschicht an der Stelle 63 eine Dicke von mindestens 3 mm haben, aber in diesem Fall könnte der Hall-IC 18 nicht mehr durch das Magnetfeld des Rotors 14 gesteuert werden.

Durch den Trenntransformator 52 und den Optokoppler 20 wird jedoch eine komplette galvanische Trennung der Leiterplatte 16 vom Netz 40 erreicht, so dass Eigensicherheit auch gegeben ist, wenn die Isolation 62 nicht die an sich vorgeschriebene Dicke hat. Man erkennt ohne weiteres, dass selbst eine weniger dicke Isolationsschicht 62 in diesem Fall zusätzlich zur Eigensicherheit beiträgt.

**Fig. 2** zeigt eine bevorzugte Ausführungsform des ECM 10 der Fig. 1, hier in Form eines Außenläufermotors 10. Dieser hat ein Basisteil 70, das einstückig mit einem Lagertragrohr 72 ausgebildet ist, in dem sich zwei Kugellager 74, 76 befinden, welche eine Welle 78 lagern, an deren oberem Ende eine Rotorglocke 80 befestigt ist. Eine Feder 82 erzeugt eine Vorspannung zwischen dem oberen Kugellager 74 und der Rotorglocke 80, sowie zwischen den Innenringen der beiden Kugellager. Am unteren Ende der Welle 78 befindet sich ein Sprengring 84. Das Basisteil 70 und das Lagertragrohr 72 können aus einem geeigneten Kunststoff hergestellt sein, oder z.B. aus Aluminium-Druckguss mit einem Magnesiumgehalt unter 6 %.

Die Rotorglocke 80 besteht, ebenso wie das Basisteil 70, bevorzugt aus einem geeigneten Kunststoff mit eingelagerten Kohlefasern, um eine statische Aufladung der Oberfläche des Kunststoffs zu verhindern. Der Oberflächenwiderstand liegt bevorzugt unter 10⁹ Ω, besonders bevorzugt im Bereich von etwa 10⁵ bis etwa 10⁹ Ω. Bevorzugt wird ein Kunststoff verwendet, der beständig gegen kurzzeitige Flammeinwirkung ist.

Die Rotorglocke 80 trägt auf ihrer Außenseite Lüfterflügel 86, mit denen sie einstückig ausgebildet ist. Nach unten erweitert sie sich konisch zu einer sogenannten Schürze 88, die mit einem stationären Teil 89 zusammenwirkt, das - wie dargestellt - in diese Schütze 88 ragt und so verhindert, dass Fremdkörper in das Innere des Elektromotors 10 gelangen. Die Strömungsrichtung der Luft ist mit 91 bezeichnet, also von oben nach unten, so dass im Bereich der Öffnung 87 der Schürze 88 eine Sogwirkung entsteht, welche dem Eindringen von Fremdkörpern entgegenwirkt.

Im Inneren der Rotorglocke 80 ist ein becherförmiges Teil 90 aus einem weichferromagnetischen Werkstoff mittels Kunststoffnieten 92 befestigt, und auf der Innenseite des Teils 90 ist der Rotormagnet 14 befestigt, bevorzugt ein sogenannter Gummimagnet, der aus einer Mischung von gummiartigen Substanzen und geeigneten Hartferriten besteht. Dies hat gegenüber einem harten Dauermagneten den Vorteil, dass bei Reibung zwischen Stator 100 und Rotormagnet 14 keine Reibungsfunken entstehen können.

In dem radialen Raum zwischen dem Rotormagneten 14 und dem Lagertragrohr 72 befindet sich der Stator des Elektromotors 10 mit einem Statorblechpaket 100, das auf die Außenseite des Lagertragrohrs 72 aufgepresst ist, einem zweiteiligen Wickelkörper 102, 104, und der Statorwicklung 12. (Das Ausführungsbeispiel zeigt einen einsträngigen ECM 10 mit einer einzigen Wicklung 12. Diese wird zweipulsig betrieben, vgl. z.B. die DE 23 46 380, wo ein entsprechender Elektromotor beschrieben ist. Die Erfindung eignet sich naturgemäß in gleicher Weise für Motoren mit mehr als einem Strang und mit mehr als zwei Stromimpulsen pro Rotordrehung von 360° el.)

Unterhalb des Statorblechpakets 100 und der Statorwicklung 12 befindet sich die Leiterplatte 16 mit dem Hall-IC 18. Diese Leiterplatte 16 ist, ebenso wie das Statorblechpaket 100 und die Wicklung 12, komplett mit einer sehr schwach leitfähigen Vergussmasse 110 umspritzt, die bevorzugt auch den Hall-IC 18 vollständig umgibt, welch letzterer etwa gegenüber dem unteren Ende 112 des Rotormagneten 14 angeordnet ist, also in dessen Streuflussbereich. Im Bereich der Wicklung 12 und der sonstigen stromführenden Teile mit energiereichen Strömen hat die Vergussmasse 110 eine Dicke von mindestens 3 mm.

Die Vergussmasse 110 dient nicht nur zur Isolierung der Wicklung 12 und der Elektronik, sondern auch zum Ableiten von elektrostatischer Aufladung. Aus diesem Grunde ist sie schwach leitend. Ihr Oberflächenwiderstand liegt bevorzugt im Bereich von 10⁵ bis 10⁹ Ω. In der Praxis können sich gelegentlich Werte von ³ Ω einstellen. Der Oberflächenwiderstand darf nicht zu niedrig sein, damit keine störenden Ströme von der Wicklung 12 zum Hall-IC 18 fließen, was das Hallsignal stören könnte. Optimal ist ein Widerstandsgradient in dem Sinne, dass der spezifische Widerstand der Isolation an der Oberfläche niedriger ist als im Inneren der Isolation.

Auf diese Weise befindet sich auch zwischen dem Rotormagneten 14 und dem Hall-IC 18 die bei Fig. 1 beschriebene, schwach leitende Isolierschicht 62, welche für eine gute galvanische Trennung 60 zwischen ECM 10 und Sensorstromkreis und damit für die sogenannte Eigensicherheit des Elektromotors 10 von großem Vorteil ist.

Bezüglich der Einzelheiten des Umspritzens des Stators mit einem Kunststoff wird der Kürze halber verwiesen auf die US 5 973 424 (US-1014), wo ein geeignetes Verfahren und geeignete Werkstoffe ausführlich beschrieben sind.

Die Wicklung 12 ist über Anschlüsse 114 auf der Leiterplatte 16 mit den Leitungen 46, 48 verbunden, welche zur Kommutierungselektronik 34 führen.

Das Vergussmaterial 110 erstreckt sich bevorzugt auch durch den Luftspalt 120 des Elektromotors 10 und bedeckt die Luftspaltseite des Statorblechpakets 100 vollständig, vgl. die US 5 973 424.

Man erhält so einen eigensicheren ECM 10, dessen Kommutierungselektronik 34 bevorzugt außerhalb des Elektromotors 10 angeordnet ist und nicht eigensicher zu sein braucht, weil zwischen ihr und der im ECM 10 befindlichen Sensorelektronik (auf der Leiterplatte 16) eine strikte galvanische Trennung 60 vorgesehen ist. Die Leiterplatte 32 kann in üblicher Weise in einem explosionsgeschützten Gehäuse außerhalb des ECM 10 angeordnet werden. Eine bevorzugte Anwendung eines solchen ECM 10 ist ein sogenannter Rohrlüfter, also ein Lüfter, der in das Rohr einer Belüftungsanlage eingebaut wird, in der auch explosive Medien vorkommen können.

Bei Bedarf kann auch zwischen dem Netz 40 und dem Gleichrichter 44 an den Stellen A, B (Fig. 1) ein Trenntransformator (analog dem Transformator 52) vorgesehen werden, welcher die Kommutierungselektronik 34 galvanisch vom Netz 40 trennt. Dadurch ist dann auch eine niedrigere Zwischenkreisspannung zwischen den Leitungen 45, 47 möglich, z.B. 20 V. Auch sonst sind vielfache Abwandlungen und Modifikationen möglich, ohne den Rahmen der Erfindung zu verlassen.

## Patentansprüche

1. Motoranordnung (11) mit einem elektronisch kommutierten Elektromotor (10) in explosionsgeschützter Ausführung, der einen permanentmagnetischen Rotor (14) und einen Stator (100) aufweist,
mit folgenden Merkmalen:
Am Stator des Elektromotors (10), und vom permanentmagnetischen Rotor (14) durch einen Luftspalt (63) getrennt, ist zur Erfassung eines Magnetfelds vom permanentmagnetischen Rotor (14) mindestens ein galvanomagnetischer Rotorstellungssensor (18) vorgesehen, dessen Ausgangssignal zur Steuerung einer Kommutierungselektronik (34) dient;
die Stromversorgung des galvanomagnetischen Rotorstellungssensors (18) erfolgt aus einem Wechsel- oder Drehstromnetz (40) unter Zwischenschaltung eines Trenntransformators (52);
das Ausgangssignal des galvanomagnetischen Sensors (18) wird über einen Optokoppler (20) der Kommutierungselektronik (34) zugeführt.

2. Motoranordnung nach Anspruch 1, bei welcher der Trenntransformator (52) in eigensicherer Ausführung ausgebildet ist.

3. Motoranordnung nach Anspruch 1 oder 2, bei welcher der galvanomagnetische Rotorstellungssensor (18) als Hall-IC ausgebildet ist.

4. Motoranordnung nach einem der vorhergehenden Ansprüche, bei welcher der galvanomagnetische Rotorstellungssensor (18) auf einer Leiterplatte (16) angeordnet ist, welche von einer schwach leitenden Vergussmasse (62, 110) umgeben ist, die bevorzugt auch den galvanomagnetischen Sensor (18) umgibt.

5. Motoranordnung nach Anspruch 4, bei welcher sich die schwach leitende Vergussmasse (62) auch in den Luftspalt (63) zwischen permanentmagnetischem Rotor (14) und Rotorstellungssensor (18) erstreckt.

6. Motoranordnung nach einem der vorhergehenden Ansprüche, bei welcher das Statorblechpaket (100) und die Statorwicklung (12) von einer schwach leitenden Vergussmasse (110) umgeben sind.

7. Motoranordnung nach einem der Ansprüche 4 bis 6, bei welcher die Vergussmasse einen Oberflächenwiderstand aufweist, der im Bereich von etwa 10⁹ Ω oder darunter liegt.

8. Motoranordnung nach einem der vorhergehenden Ansprüche, deren Elektromotor (10) als Außenläufermotor (10) ausgebildet ist, dessen Rotorglocke (80) im Bereich ihres freien Endes eine radiale Erweiterung (88) aufweist.

9. Motoranordnung nach Anspruch 8, bei welcher auf der Außenseite der Rotorglocke (80) Lüfterflügel (86) angeordnet sind.

10. Motoranordnung nach Anspruch 8 und 9, bei welcher die radiale Erweiterung (88) der Rotorglocke (80) auf der Abströmseite der von den Lüfterflügeln (86) geförderten Luft (91) vorgesehen ist.

11. Motoranordnung nach Anspruch 9 oder 10, bei welcher die Rotorglocke (80) aus Kunststoff ausgebildet ist und Lüfterflügel (86) einstückig mit ihr ausgebildet sind.

12. Motoranordnung nach einem der Ansprüche 8 bis 11, bei welcher innerhalb einer Rotorglocke (80) aus Kunststoff ein weichferromagnetisches Rückschlussteil (90) befestigt ist, welches als Träger und magnetischer Rückschluss (yoke) für einen Permanentmagneten (14) des Rotors dient.

13. Motoranordnung nach Anspruch 11 oder 12, bei welcher der Kunststoff der Rotorglocke (80) schwach leitend ausgebildet ist und einen Oberflächenwiderstand von kleiner als 10⁹ Ω hat.

14. Motoranordnung nach Anspruch 13, bei welcher dem Kunststoff der Rotorglocke (80) zwecks Herabsetzung seines Oberflächenwiderstands Kohlefasern zugesetzt sind.

15. Motoranordnung nach einem der Ansprüche 9 bis 14, bei welcher der vom Elektromotor (10) angetriebene Lüfter (86) als sogenannter Rohrlüfter ausgebildet ist, welcher zur Anordnung in einem von einem Gas durchströmten Rohr ausgebildet ist.

16. Motoranordnung nach einem der vorhergehenden Ansprüche, bei welcher eine Strombegrenzung (34) für den zur Motorwicklung (12) fließenden Strom vorgesehen ist.

17. Motoranordnung nach einem der vorhergehenden Ansprüche, bei welcher die Kommutierungselektronik (34) der Motoranordnung (11) mindestens teilweise außerhalb des Elektromotors (10) angeordnet ist.

18. Motoranordnung nach Anspruch 17, bei welcher die Kommutierungselektronik (34) in einem druckfesten Gehäuse außerhalb des Elektromotors (10) explosionsgeschützt angeordnet ist.

19. Motoranordnung nach einem der vorhergehenden Ansprüche, bei welcher der Rotormagnet (14) als Gummimagnet ausgebildet ist.

## Claims

1. Motor arrangement (11) with an electronically commutated electric motor (10) of an explosion-proof design, which motor comprises a permanent magnet rotor (14) and a stator (100),
with the following features:
At least one galvanomagnetic rotor position sensor (18) is provided at the stator of the electric motor (10), and separated from the permanent magnet rotor (14) by an air gap (63), for detecting a magnetic field of the permanent magnet rotor (14), the output signal of which sensor serves to control commutation electronics (34);
power is supplied to the galvanomagnetic rotor position sensor (18) from an a.c. or a three-phase network (40), with the interconnection of an isolating transformer (52);
the output signal of the galvanomagnetic sensor (18) is delivered via an optocoupler (20) to the commutation electronics (34).

2. Motor arrangement according to Claim 1, in which the isolating transformer (52) is of an inherently safe design.

3. Motor arrangement according to Claim 1 or 2, in which the galvanomagnetic rotor position sensor (18) is formed as a Hall IC.

4. Motor arrangement according to any one of the preceding Claims, in which the galvanomagnetic rotor position sensor (18) is disposed on a printed circuit board (16) which is surrounded by a poorly conducting potting compound (62, 110) which preferably also surrounds the galvanomagnetic sensor (18).

5. Motor arrangement according to Claim 4, in which the poorly conducting potting compound (62) also extends in the air gap (63) between the permanent magnet rotor (14) and the rotor position sensor (18).

6. Motor arrangement according to any one of the preceding Claims, in which the stator iron core (100) and the stator winding (12) are surrounded by a poorly conducting potting compound (110).

7. Motor arrangement according to any one of Claims 4 to 6, in which the potting compound has a surface resistivity which lies in the region of approximately 10⁹ Ω or below.

8. Motor arrangement according to any one of the preceding Claims, the electric motor (10) of which is formed as an external rotor motor (10), the rotor bell (80) of which has a radial widening (88) in the region of its free end.

9. Motor arrangement according to Claim 8, in which fan blades (86) are disposed on the outside of the rotor bell (80).

10. Motor arrangement according to Claims 8 and 9, in which the radial widening (88) of the rotor bell (80) is provided on the flow-off side of the air (91) which is delivered by the fan blades (86).

11. Motor arrangement according to Claim 9 or 10, in which the rotor bell (80) is formed from plastics material and the fan blades (86) are formed in one piece with this.

12. Motor arrangement according to any one of Claims 8 to 11, in which a soft ferromagnetic yoke part (90) is fastened inside a rotor bell (80) of plastics material, which part serves as a support and a magnetic yoke for a permanent magnet (14) of the rotor.

13. Motor arrangement according to Claim 11 or 12, in which the plastics material of the rotor bell (80) is poorly conducting and has a surface resistivity of less than 10⁹ Ω.

14. Motor arrangement according to Claim 13, in which carbon fibres are added to the plastics material of the rotor bell (80) for the purpose of reducing its surface resistivity.

15. Motor arrangement according to any one of Claims 9 to 14, in which the fan (86), which is driven by the electric motor (10), is formed as a so-called tube fan which is formed to be disposed in a tube through which a gas flows.

16. Motor arrangement according to any one of the preceding Claims, in which a current limiting system (34) is provided for the current flowing to the motor winding (12).

17. Motor arrangement according to any one of the preceding Claims, in which the commutation electronics (34) of the motor arrangement (11) are disposed at least partly outside of the electric motor (10).

18. Motor arrangement according to Claim 17, in which the commutation electronics (34) are disposed in an explosion-proof manner in a pressure-proof housing outside of the electric motor (10).

19. Motor arrangement according to any one of the preceding Claims, in which the rotor magnet (14) is formed as a rubber magnet.

## Revendications

1. Ensemble moteur (11) comprenant un moteur électrique (10) à commutation électronique en exécution antidéflagrante qui présente un rotor à aimant permanent (14) et un stator (100),
présentant les caractéristiques suivantes :
au moins un capteur de position de rotor galvanomagnétique (18), dont le signal de sortie sert à commander une électronique de commutation (34), est prévu sur le stator du moteur électrique (10) pour la saisie d'un champ magnétique du rotor à aimant permanent (14) et séparé du rotor à aimant permanent (14) par un entrefer (63) ;
le capteur de position de rotor galvanomagnétique (18) est alimenté en courant à partir d'un réseau à courant alternatif ou triphasé (40) avec transformateur de séparation (52) intercalé ;
le signal de sortie du capteur de position de rotor galvanomagnétique (18) est amené à l'électronique de commutation (34) par l'intermédiaire d'un optocoupleur (20).

2. Ensemble moteur selon la revendication 1, dans lequel le transformateur de séparation (52) est réalisé en exécution à sécurité intrinsèque.

3. Ensemble moteur selon la revendication 1 ou 2, dans lequel le capteur de position de rotor galvanomagnétique (18) est réalisé sous forme de CI Hall.

4. Ensemble moteur selon l'une des revendications précédentes, dans lequel le capteur de position de rotor galvanomagnétique (18) est disposé sur une carte à circuit imprimé (16) qui est entourée d'une masse de scellement faiblement conductrice (62, 110) qui entoure aussi de préférence le capteur galvanomagnétique (18).

5. Ensemble moteur selon la revendication 4, dans lequel la masse de scellement faiblement conductrice (62) s'étend aussi dans l'entrefer (63) entre rotor à aimant permanent (14) et capteur de position de rotor (18).

6. Ensemble moteur selon l'une des revendications précédentes, dans lequel le paquet de tôles de stator (100) et l'enroulement de stator (12) sont entourés par une masse de scellement faiblement conductrice (110).

7. Ensemble moteur selon l'une des revendications 4 à 6, dans lequel la masse de scellement présente une résistance de surface qui est de l'ordre de 10⁹ Q ou moins.

8. Ensemble moteur selon l'une des revendications précédentes, dont le moteur électrique (10) est réalisé sous forme de moteur à rotor extérieur (10) dont la cloche de rotor (80) présente un élargissement radial (88) à son extrémité libre.

9. Ensemble moteur selon la revendication 8, dans lequel des ailettes de ventilateur (86) sont disposées du côté extérieur de la cloche de rotor (80).

10. Ensemble moteur selon les revendications 8 et 9, dans lequel l'élargissement radial (88) de la cloche de rotor (80) est prévu du côté du flux sortant de l'air (91) refoulé par les ailettes de ventilateur (86).

11. Ensemble moteur selon la revendication 9 ou 10, dans lequel la cloche de rotor (80) est réalisée en matière plastique et les ailettes de ventilateur (86) sont réalisées d'une seule pièce avec elle.

12. Ensemble moteur selon l'une des revendications 8 à 11, dans lequel un élément de retour ferromagnétique doux (90) qui sert de support et de culasse magnétique (yoke) pour un aimant permanent (14) du rotor est fixé à l'intérieur d'une cloche de rotor (80) en matière plastique.

13. Ensemble moteur selon la revendication 11 ou 12, dans lequel la matière plastique de la cloche de rotor (80) est conçue faiblement conductrice et a une résistance de surface inférieure à 10⁹ Ω.

14. Ensemble moteur selon la revendication 13, dans lequel des fibres de carbone sont ajoutées à la matière plastique de la cloche de rotor (80) dans le but de diminuer sa résistance de surface.

15. Ensemble moteur selon l'une des revendications 9 à 14, dans lequel le ventilateur (86) entraîné par le moteur électrique (10) est réalisé sous forme de ventilateur de tube qui est conçu pour être disposé dans un tube parcouru par un gaz.

16. Ensemble moteur selon l'une des revendications précédentes, dans lequel il est prévu une limitation de courant (34) pour le courant circulant vers l'enroulement de moteur (12).

17. Ensemble moteur selon l'une des revendications précédentes, dans lequel l'électronique de commutation (34) de l'ensemble moteur (11) est disposée au moins partiellement en dehors du moteur électrique (10).

18. Ensemble moteur selon la revendication 17, dans lequel l'électronique de commutation (34) est disposée à l'abri des explosions dans un boîtier résistant à la pression en dehors du moteur électrique (10).

19. Ensemble moteur selon l'une des revendications précédentes, dans lequel l'aimant de rotor (14) est réalisé sous forme d'aimant en caoutchouc.
